Europäisches Patentamt

European Patent Office

Office européen des brevets

(19)

(11) EP 0 932 313 A1

(12) **EUROPÄISCHE PATENTANMELDUNG**

(43) Veröffentlichungstag:
28.07.1999 Patentblatt 1999/30

(51) Int. Cl.⁶: **H04Q 3/66**

(21) Anmeldenummer: 98101399.8

(22) Anmeldetag: 27.01.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(71) Anmelder:
SIEMENS AKTIENGESELLSCHAFT
80333 München (DE)

(72) Erfinder:
• Köster, Gerta, Dr.rer.nat.Dipl.-Math.
  81543 München (DE)
• Gradischnig, Klaus, Dipl.-Ing.
  82131 Gauting (DE)
• Oehlerich, Jörg, Dipl.-Ing.
  82131 Stockdorf (DE)

(54) **Verfahren zur Überlast-Abwehr für eine Vermittlungsstelle**

(57) Automatic Congestion Control (ACC) ist ein netzweites Verfahren zur Überlast-Abwehr für eine überlastete Vermittlungsstelle, demgemäß den Nachbar-Vermittlungsstellen einer überlasteten Vermittlungsstelle von dieser über einen netzweit festgelegten Überlast-Wert (ACL-Wert) der Grad der Überlast mitgeteilt wird. ACC sieht für den ACL-Wert allerdings nur zwei Werte vor und führt deshalb zu heftigen, abrupten Abwehrmaßnahmen in den genannten Nachbar-Ver- mittlungsstellen. Die Erfindung löst dieses Problem dadurch, daß in einer Nachbar-Vermittlungsstelle aus der Information mehrerer ACL-Werte ein effektiver Überlast-Wert (OCL-Wert) ermittelt wird, der zur Steuerung der Abwehrmaßnahme dieser Nachbar-Vermittlungsstelle hinsichtlich der überlasteten Vermittlungsstelle herangezogen wird.

FIG 3

Informieren einer Nachbar-VST

EP 0 932 313 A1

**Beschreibung**

Automatic Congestion Control (ACC) ist ein netzweiter Abwehrmechanismus mit dem Vermittlungsstellen vor Überlast geschützt werden sollen. ACC gewinnt gegenüber anderen standardisierten Ansätzen an Bedeutung, da herstellereigene Verfahren - wie z.B. „Delayed Release" bei Siemens - in Zukunft durch die Standards eingeschränkt werden. Zudem ist ACC der einzige für Breitbandvermittlungsstellen vorgesehene Abwehrmechanismus. Die Wirkung von ACC ist jedoch mangelhaft, wie durch Netzsimulationen nachgewiesen werden konnte. Die Leistung einer Vermittlungsstelle in Überlast sackt drastisch ab. Es besteht große Gefahr von Bufferüberläufen.

Im folgenden wird der Mechanismus nach Standard beschrieben.

**Automatic Congestion Control nach ITU-Standard**

Automatic Congestion Control ist in den ITU-Standards E.412, E.542, Q.763 und Q.764 beschrieben. Die Grundidee ist, Verkehr in Richtung einer überlasteten Vermittlungsstelle (VST) bereits an an den Nachbar-Vermittlungsstelle zu drosseln - also erst gar nicht an die überlastete VST heranzulassen. Dieser Ansatz birgt drei grundlegende Probleme, von deren Lösung, die Güte des Algorigthmus abhängt:

- die Information der Nachbarknoten,
- die Steuerung der Reaktionen an den Nachbarknoten,
- die Rückkoppelung über den Erfolg der Maßnahmen.

ACC sieht 2 Werte vor, um Überlast zu beschreiben:

- Ein Automatic Congestion Level (ACL) von 1 bedeutet Überlast.
- Ein ACL von 2 steht für starke Überlast.

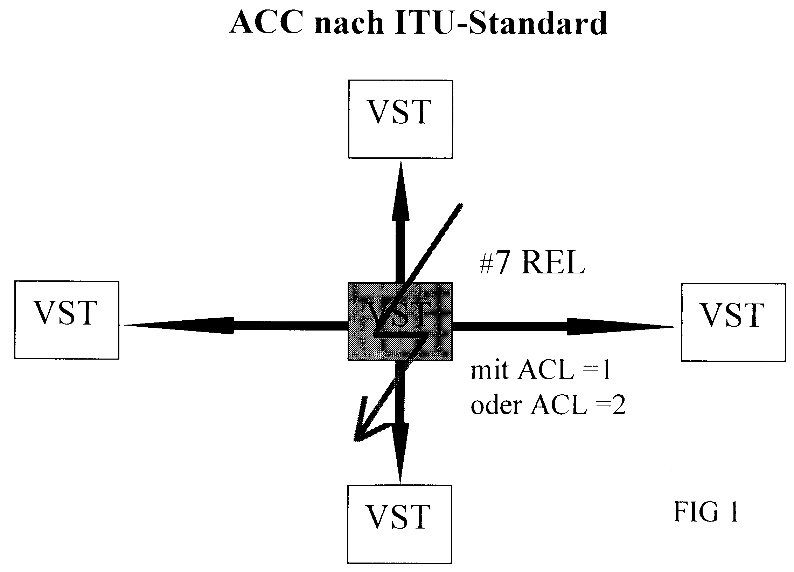

Der ACL wird an der überlasteten VST bestimmt. Er wird mit der #7-Meldung REL (release), die beim Auslösen eines Calls zwischen den betroffenen Vermittlungstellen verschickt wird, an die Nachbar-Vermittlungsstellen übertragen (siehe FIG 1). Erhält eine VST einen positiven ACL von einer Nachbar-VST, wird ein Timer von zur Zeit 10s aufgezogen, der dafür sorgen soll, daß eventuelle Abwehrmaßnahmen wieder eingestellt (d.h. aufgehoben) werden, falls nach Timerablauf kein neuer positiver ACL eingetrifft.

An den Nachbar-VSTn der überlasteten VST sollen je nach ACL-Wert ein gewisser Prozentsatz aller Calls abgewehrt oder auf alternativem Weg geroutet werden. Die Entscheidung darüber, welche Maßnahme ergriffen wird, steht dem Betreiber frei. Als einzige Vorschrift muß der Prozentsatz ein Vielfaches von 12,5 % (1/8) sein.

**Automatic Congestion Control in der EWSD-Implementierung**

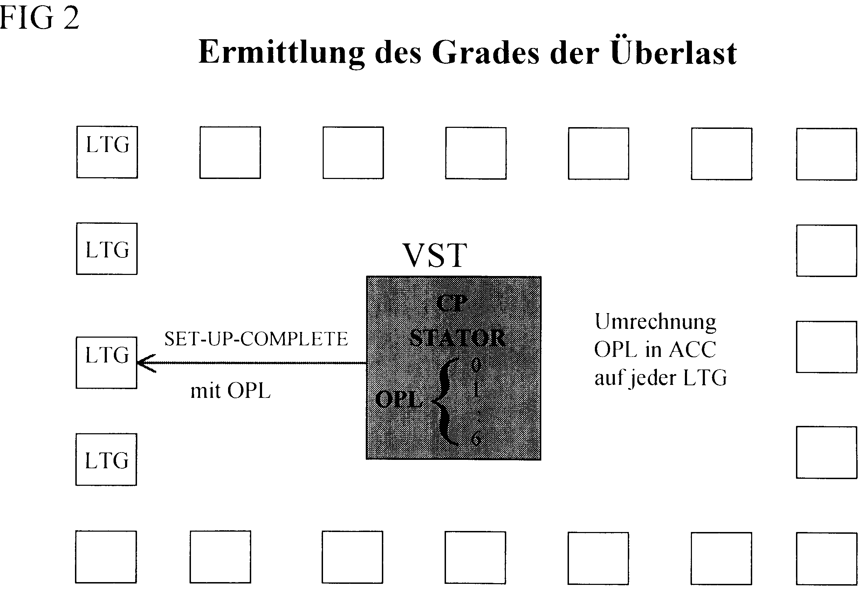

Im folgenden wird die Implementierung der ACC in dem System EWSD näher erläutert (siehe FIG 2).

Die EWSD-Implementierung folgt dem ACC-Standard. Unter Überlast wird CP-Überlast verstanden. An der überlasteten VST wird der Grad der Überlast mit Hilfe des STATOR-Algorithmus ermittelt, der Anzahl und mittlere Bearbeitungszeit aller am CP eingetroffenen Meldungen und die Rechenkapazität berücksichtigt. Eventuelle Überlast wird in den Overload Priority level (OPL) mit den Überlastgraden 0, 1, 2, 3, 4, 5, 6 übersetzt.

In der überlasteten VST wird vom CP der OPL jeweils mit dem „Rucksackverfahren" („piggy-back" ) an Commands mit JC1 = 0 (job code 1) angehängt und so an die LTGs weitergeleitet. Commands mit JC1=0 sind SET-UP-COMPLETE (beim Aufbau eines Calls) und COME-AGAIN (Anforderung von mehr Information). Dieses Verfahren bedeutet, daß der OPL-Wert auf einer LTG nur dann aktualisiert wird, wenn über die LTG ein Call etabliert wird. Dadurch entsteht eine Diffusion der Information, die sich bezüglich ACC nachteilig auswirkt. Es gibt einige Außnahmeregeln im Verfahren: Zu Beginn einer Überlastsituation - also wenn der STATOR nach einer Phase mit normaler Last zum ersten Mal Überlast feststellt -, wird ein OPL von 3 über das Command: ADJUST-OPL gleichzeitig an alle LTGs verschickt. Droht die VT-Eingabeliste (vermittlungstechnische Eingabeliste) am CP überzulaufen (mehr als 800 Einträge), so wird der OPL=6 mit dem Command: ADJUST-OPL ausgegeben.

An der LTG wird der OPL nach folgenden Schema in einen ACL übersetzt. Der ACL-Wert 0 steht hier für keine oder wenig Überlast.

| OPL | ACL |
|-----|-----|
| 0 | 0 |
| 1 | 0 |
| 2 | 0 |
| 3 | 1 |
| 4 | 1 |
| 5 | 2 |
| 6 | 2 |

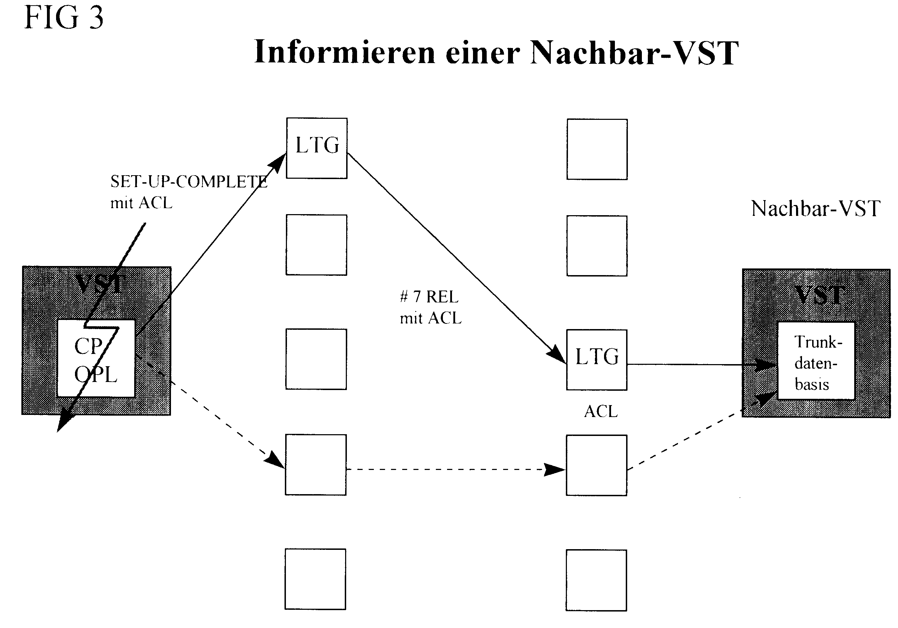

Von einer LTG an der überlasteten VST wird ein ACL nun gemäß dem #7-Standard mit jeder Meldung REL an die Nachbarn verschickt (siehe FIG 3). Dort wird der ACL ebenfalls auf einer LTG empfangen. Mit der Message:REL-C (release complete), die den CP über die Auflösung eines Calls informiert, wird der ACL von dem GP der LTG zum CP der Nachbar-VST transportiert und dort bündelbezogen in die Trunkdatenbasis eingetragen. Das bedeutet, daß an der Nachbar-VST bündelbezogen abgewehrt bzw. alternativ geroutet wird. Das bedeutet des weiteren, daß an der Nachbar-VST nahezu gleichzeitig verschiedene - das heißt widersprüchliche - ACL-Informationen zu einem Bündel in Richtung der überlasteten VST empfangen werden können. Diese Information können zum Beispiel von verschiedenen LTGs der überlasteten VST stammen. Positive ACL-Werte überschreiben sich dabei sofort.

In der Trunkdatenbasis des CP wird mit jedem Eintreffen eines positiven ACL ein Timer von 10s aufgezogen. Läuft dieser Timer ab, ohne daß ein neuer positiver ACL empfangen wird, wird der ACL in der Trunkdatenbasis um 1 herabgezählt und der Timer wird - im Falle eines neuen ACL-Wertes von 1 - neu aufgezogen.

An den Nachbarvermittlungstellen ist die Art und Stärke der Reaktion in Tabellen festgelegt, die manuell eingerichtet werden. Die Abwehr erfolgt pauschal, wie im Standard vorgesehen. So könnten z.B. bei einem ACL von 1 50% aller Calls abgewehrt werden und bei einem ACL von 2 100 %.

**Drei Hauptprobleme des ACC-Algorithmus**

Für die in Simulationen festgestellten Leistungsdefizite bei ACC sind vor allem drei Schwachpunkte des Algorithmus verantwortlich. Alle führen sie zu heftigen, abrupten Angebotschwankungen in deren Folge Listen voll- und überlaufen, die Wartezeiten lang werden und der Durchsatz absackt.

**Problem 1: Grobe Steuerung**

Die sehr grobe Steuerung der Abwehr mit nur 2 ACL-Werten und entsprechenden Abwehrraten führt zu heftigen Angebotschwankungen, wodurch die Eingabeliste am CP sehr lang wird und der Durchsatz sinkt.

**Problem 2: „Scheunentor-Effekt"**

Geht eine VST in Überlast, so sendet sie an *alle* Nachbar-VSTn (fast) gleichzeitig den selben ACL. Damit wird an allen Nachbar-VSTn pauschal der selbe Verkehrsanteil in Richtung der überlasteten VST gedrosselt. Bei einem ACL von 1, also „normaler" Überlast bedeutet dies meist, daß die überlastete VST nun weniger Verkehr angeboten bekommt, als sie tatsächlich abwickeln kann. Sie geht in *Unterlast* und der STATOR errechnet einen OPL von 0. Die Nachbarn drosseln dennoch für mindestens 10s weiter den Verkehr, bis der Timer an allen Nachbarn abgelaufen ist, dort die ACLs in der Trunkdatenbasis zurückgesetzt sind und wieder der *volle* Verkehr zugelassen wird. Das „Scheunentor" wird damit wieder geöffnet. Die VST stellt sofort wieder Überlast fest und der Prozeß wiederholt sich.

Die Abwehrperiode kann länger als die 10s des Timers dauern, wenn auf einigen LTGs der überlasteten VST ACLs verweilen, die länger nicht durch ein Command: SET-UP-COMPLETE/COME-AGAIN aktualisiert wurden. Diese inkorrekten ACLs werden ja weiter über REL-Meldungen an die Nachbarn verteilt und überschreiben dort Nullwerte in den Trunkdatenbasen. Bei hoher Überlast mit ACL 2 fallen die Auswirkungen des Timers weg, da positive ACL-Werte sofort in die Trunkdatenbasis eingetragen werden. Dennoch ergibt sich durch die verweilenden, nicht aktualisierten ACLs ein ähnlich ungünstiger Effekt.

Der „Scheunentoreffekt" führt somit ebenfalls zu heftigen, abrupten Angebotschwankungen. Es ergeben sich lange Warteschlangen und -zeiten am CP und der Durchsatz bricht ein.

**Problem 3: Informationsdefizite bei hohen Abwehrraten**

Der ACL wird übertragen, indem man ihn an Meldungen hängt, die zu Calls gehören (SET-UP-COMPLETE, COME-AGAIN, REL, REL-C). Damit ist ein gewisser Anteil an erfolgreich an die überlastete VST weitergeleiteten Calls notwendig, um den Informationsaustausch zu gewährleisten. Bei hohen pauschalen Abwehrraten (100%) entstehen aber Situationen, in denen fast kein Call zur überlasteten VST geroutet wird. Zu wenige Commands:SET-UP-COMPLETE führen dazu, daß OPL und ACL auf den LTGs der überlasteten VST nicht aktuell sind. Zu wenig REL-Meldungen verursachen veraltete ACLs auf den Nachbar-Vermittlungstellen. Um zu verhindern, daß Überlastwerte endlos bestehen, wenn der Informationsaustausch völlig zum Erliegen kommt, wird auf den LTGs der überlasteten VST alle 4 Sekunden der OPL herabgezählt und der ACL entsprechend angepaßt. Diese „Notbremse" kann die Problemeatik allerdings nur mildern.

Versucht man die genannten Probleme zu lösen, indem man den 10s-Timer einer Nachbar-VST verkürzt, zeigen sich die selben negativen Effekte. Zusätzlich ist bei großer Überlast nun aber die Abwehrphase zu kurz, so daß die überlaufenden Listen nicht mehr abgebaut werden können.

Der Erfindung liegt die Aufgabe zugrunde, die genannten Probleme zu lösen.

Diese Aufgabe wird durch ein Verfahren nach Anspruch 1 gelöst.

Durch die Erfindung wird die Abwehrsteuerung verbessert, ohne daß zwischen den VST ein bzgl. der Überlast-Abwehr netzweit festgelegter Informationsaustausch verändert bzw. verletzt werden muß.

Im folgenden wird ein Ausführungsbeispiel der Erfindung anhand der Zeichnung näher erläutert, wobei die Zeichnung 4 Figuren umfaßt.

FIG 1 zeigt das ACC-Verfahren nach ITU-Standard.
FIG 2 zeigt die Ermittlung des Grades der Überlast (ACL-Wert) in der überlasteten VST.
FIG 3 zeigt das Informieren einer Nachbar-VST anhand gesendeter ACL-Werte.

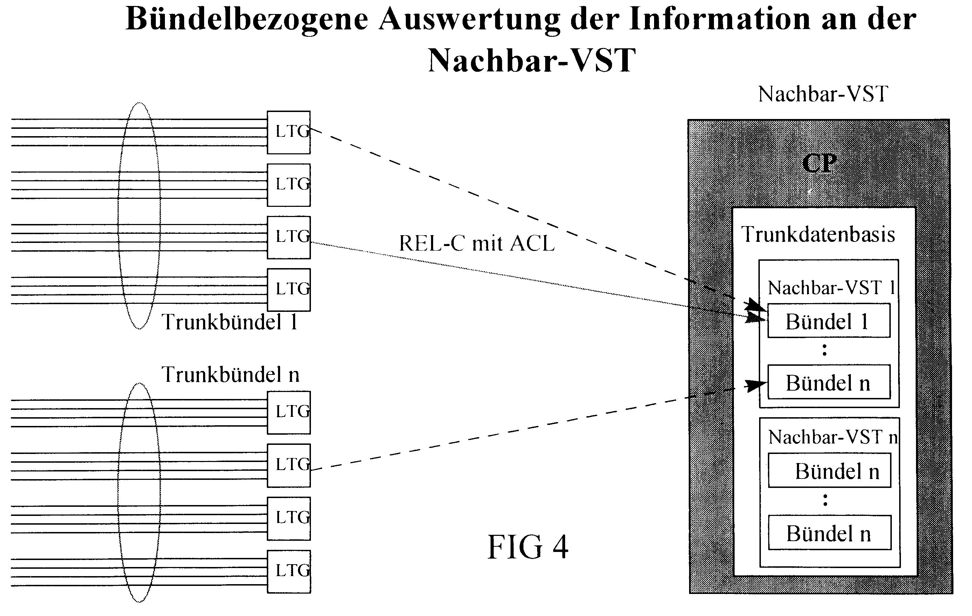

FIG 4 zeigt die bündelbezogene Auswertung der ACL-Wert-Information in der Nachbar-VST.

Das erfindungsgemäße Verfahren ermittelt aus der von einer Nachbar-Vermittlungsstelle empfangenen Grobinformation (ACL-Werte) einen sogenannten effektiven Überlastwert (OCL-Wert), der dem tatsächlichen Überlastgrad einer überlasteten Vermittlungsstelle nahekommt, da dieser eine feinere Abstufung aufweist und bei dessen Ermittlung die Werte der Vergangenheit miteinbezogen werden. Im Unterschied zu einem tatsächlichen momentanen Überlastgrad ist der ermittelte effektive Überlastwert allerdings geglättet, um die Abwehr weicher zu steuern (Glättung bedeutet, daß Spitzen im Verlauf des tatsächlichen Überlastwertes gedämpft werden). Damit schwanken auch die Abwehrrektionen weniger extrem).

Besonders in Zusammenwirken mit einem weiteren Abwehrverfahren (Abwehr an der überlasteten Vermittlungstelle selbst nach dem „Overload Priority Level OPL"), das an Siemens-Vermittlungsstellen verwendet wird, zeigen die Simulationen sehr gute Leistungsdaten (durchgestellte Calls, Wartezeiten, Warteschlangenlängen, Prozessorauslastung) an den überlasteten Vermittlungsstellen. Aber auch ohne weitere Abwehrmaßnahmen neben ACC bewirkt die Erfindung, daß die Vermittlungsstellen sinnvoll entlastet werden.

**Rückgewinnung des tatsächlichen Überlastgrades und Glättung**

Die folgenden Ausführungsbeispiele beruhen alle auf der Idee, den tatsächlichen Überlastgrad aus den groben ACL-Werten 1 und 2 und der indirekten Information aus einer REL-Meldung ohne ACL (bedeutet keine Überlast) zurückzugewinnen und diesen zusätzlich zu glätten, um die Abwehrmaßnahmen zu beruhigen. Zu diesem Zweck wird ein effektive Überlastgrad, der sogenannte OCL (overload congestion level), aus der Historie der empfangenen ACLs, d.h. aus der Information mehrerer zurückliegender ACLs, bestimmt und dieser auf einen Abwehrsteuerungswert abgebildet, gemäß dem die Nachbarvermittlungsstellen in einer feineren Abstufung abwehren. Die feinere Abstufung kann dabei zu dem ITU-Standard konform ausgelegt sein (siehe Ausführungsbeispiele).

Es folgen Ausführungsbeispiele zur Berechnung des geglätteten Überlastgrades OCL (Overload Congestion Level)

**Beispiel 1: Berechnung des Überlastgrades aus allen innerhalb eines gewissen Zeitraums empfangenen ACLs**

Ein einzelner ACL-Wert gibt zwar nur sehr grobe Information über die Überlastsituation, betrachtet man aber die vorher eingetroffenen Werte mit und bestimmt einen vernünftigen Mittelwert, erhält man präzisere Aussagen, die zudem geglättet sind. Der folgende Ansatz wurde in Simulationen getestet und führt zu erheblichen Verbesserungen der Leistung.

Im Abstand von je einer Sekunde wird der Mittelwert über alle im vorausgegangenen Sekundenintervall eingetroffenen ACLs gebildet. Dabei wird REL-Meldungen, die ohne ACC-Information eintreffen, der Pseudo-ACL-Wert 0 zugeordnet. Auf diese Weise wird auch die negative Information einer leeren REL-Meldung, d.h. die Information „es liegt keine Überlast vor", genutzt. A(j) soll den Mittelwert über die ACLs und Pseudo-ACLs für das Intervall, dessen Beginn j Sekunden zurückliegt bezeichnen. Die Mittelwerte werden gewichtet und addiert und so der neue Überlastgrad (OCL - Overload Congestion Level) als gewichtetes Mittel gebildet. Der OCL ist eine gestauchte Abbildung des OPLs und kann alle Werte zwischen 0 und 2 annehmen.

$$OCL = \sum_{j=1,\dots,n} w(j) \cdot A(j), \qquad n = 20, \qquad w(j) = \frac{1/\sqrt{j}}{\sum_{k=1}^{20} 1/\sqrt{k}}.$$

Formel 1: OCL-Bestimmung (jede Sekunde) aus den ACL-Mittelwerten der letzten 20 Sekundenintervalle.

Mit den oben beschriebenen Gewichten $w(j)$ wurden in Simulationen gute Ergenisse erzielt. Natürlich sind grundsätzlich auch weitere Gewichte möglich, wobei für die Glättung wichtig ist, daß die Gewichte mit steigendem Index $j$ nicht zu schnell abfallen.

Als weitere Möglichkeit kann der OCL halb rekusiv bestimmt werden. Dies setzt eine Initialisierung des OCL voraus. Dazu sollte der erste ACL-Mittelwert verwendet werden.

$$OCL_{neu} = \alpha \cdot OCL_{alt} + (1-\alpha) \cdot A(1)$$

Formel 2: quasi rekursive OCL-Bestimmung

Wählt man $\alpha=1/2$ erhält man die Glieder der geometrische Reihe als Gewichte. Mit $\alpha=0,9$ erhält man in Siumaltionen eine ähnlich gute Funktionsweise des Verfahrens, wie bei Verwendung der Summenformel in Formel 1. Anhand von Simulationen kann der optimale Wert für $\alpha$ bestimmt werden.

Abgewehrt wird nach folgendem Schema:

| Überlastgrad | Abwehr in % |
|---|---|
| 0,00 - 0,249 | 0 |
| 0,25 - 0,499 | 12,5 |
| 0,50 - 0,749 | 25 |
| 0,75 - 0,999 | 37,5 |
| 1,00 - 1,249 | 50 |
| 1,25 - 1,499 | 62,5 |
| 1,50 - 1,749 | 75 |
| 1,75 - 1,999 | 87,5 |
| 2,00 | 100 |

Tabelle 2: Abwehr gemäß OCL-Werten

Jeder OCL wird also gemäß Tabelle 2 in einen Wert zur Steuerung des Abwehrgrades abgebildet, der im folgenden auch als Abwehrsteuerungswert bezeichnet wird.

**Beispiel 2: Berechnung eines geglätteten OCLs mit Hilfe des Timers**

Hier werden für den OCL zum Beispiel die 8 Stufen des OPL vorgesehen: 0, 1, 2, 3, 4, 5, 6, 7, 8. Außerdem gibt es zwei Grundzustände einer (Nachbar-)VST bezüglich Congestion :

- „no congestion detected",
- „congestion detected".

Wird zum ersten Mal nach einer Phase normaler Last ein ACL>0 empfangen, ändert sich der Grundzustand zu „congestion detected". Der OCL wird daraufhin z.B. auf den Wert 4 initialisiert. Gleichzeitig wird ein Timer von 1 Sekunde aufgezogen. Nach Ablauf des Timers wird der Mittelwert A(1) über alle ACLs im zurückliegenden Sekundenintervall verwendet, um den OCL anzupassen:

$$A(1) \geq \alpha \Rightarrow OCL_{neu} = \min(OCL_{alt}+1, 8),$$

$$A(1) \leq \beta \Rightarrow OCL_{neu} = \max(OCL_{alt}-1, 0).$$

Formel 3: OCL-Anpassung nach Timerablauf.

Für $\alpha$ und $\beta$ werden die Werte $\alpha$=1,5 und $\beta$=0,5 vorgeschlagen. Die optimalen Parmameter können über Simulationen gefunden werden. Bisherige Simualtionen zeigen jedoch, daß das Verfahren - etwa durch Einführen weiterer Schwellwerte - verfeinert werden müßte, um eine zu dem vorigen Abschnitt beschriebenen Verfahren vergleichbare Leistungsfähigleit zu erreichen.

Bleibt der OCL in einem 10-Sekunden-Intervall (ein zweiter Timer) auf 0 und wird nur ACL=0 empfangen, geht die VST in den Grundzustand "no congestion detected" zurück. Gedrosselt wird ähnlich wie im vorangegangenen Vorschlag.

| Überlastg rad | Abwehr in % |
|---|---|
| 0 | 0 |
| 1 | 12,5 |
| 2 | 25 |
| 3 | 37,5 |
| 4 | 50 |
| 5 | 62,5 |
| 6 | 75 |
| 7 | 87,5 |
| 8 | 100 |

Tabelle 3: Abwehr gemäß OCL-Werten

**Berechnung unter Berücksichtigung der Frequenz ankommender ACLs**

Eine weitere Möglichkeit, Information zurückzugewinnen, ist die Frequenz ankommender ACLs mit einzubeziehen: Der OCL wird mit Empfang jedes ACL aktualisiert. Es werden wieder die OCL-Werte 0, 1, 2, 3, 4, 5, 6, 7, 8 verwendet und wie in Tabelle 3 abgewehrt. Die Anpassung des OCL ist wie folgt geregelt (Initialisierung des OCL_alt: OCL_alt=0).

| OCL_alt | ACL=0 | ACL=1 | ACL=2 |
|---|---|---|---|
| 0,1,2 | $OCL_{neu} = \max\left(OCL_{alt} - 1,\ 0\right)$ | $OCL_{neu} = \min\left(OCL_{alt} + 1,\ 8\right)$ | $OCL_{neu} = \min\left(OCL_{alt} + 2,\ 8\right)$ |
| 3,4 | $OCL_{neu} = \max\left(OCL_{alt} - 1,\ 0\right)$ | $OCL_{neu} = \min\left(OCL_{alt} + 1,\ 8\right)$ | $OCL_{neu} = \min\left(OCL_{alt} + 2,\ 8\right)$ |
| 5,6 | $OCL_{neu} = \max\left(OCL_{alt} - 1,\ 0\right)$ | $OCL_{neu} = OCL_{alt}$ | $OCL_{neu} = \min\left(OCL_{alt} + 1,\ 8\right)$ |
| 7,8 | $OCL_{neu} = \max\left(OCL_{alt} - 2,\ 0\right)$ | $OCL_{neu} = \max\left(OCL_{alt} - 1,\ 0\right)$ | $OCL_{neu} = \min\left(OCL_{alt} + 1,\ 8\right)$ |

Formel 4: Anpassung des OPL mit jedem eintreffenden ACL (Berücksichtigung der Frequenz)

Weitere Glättung könnte erreicht werden, indem in einem gewissen Zeitintervall nach einer Anpassung des OCLs, alle ankommenden ACLs ignoriert werden. Allerdings widerspräche ein solches Glättungskonzept dem Wunsch, die Frequenz ankommender positiver ACL-Werte auszunutzen.

**Abkürzungen**

ACC     automatic congestion control
ACL     automatic congestion level
CP     Koordinationsprozessor
GP     group processor- Prozessor auf der LTG
LTG     line trunk group - Anschlußgruppe
OCL     overload congestion level
OPL     overload priority level
REL     order: Release
REL-C     message: Release Complete
VST     Vermittlungsstelle

**Patentansprüche**

1. Verfahren zur Überlast-Abwehr für eine Vermittlungsstelle, demgemäß
den Nachbar-Vermittlungsstellen von einer bei sich Überlast feststellenden Vermittlungsstelle über einen netzweit festgelegten Überlast-Wert (ACL-Wert) mitgeteilt wird, in welchem Grad der Überlast sie sich befindet,
**dadurch gekennzeichnet,** daß
in einer Nachbar-Vermittlungsstelle aus der Information mehrerer ACL-Werte ein effektiver Überlast-Wert (OCL-Wert), ermittelt wird, der zur Steuerung der Abwehrmaßnahme dieser Nachbar-Vermittlungsstelle hinsichtlich der überlasteten Vermittlungsstelle herangezogen wird.

2. Verfahren nach Anspruch 1,
**dadurch gekennzeichnet,** daß
der ACL-Wert jeweils in einer Call-Processing-Meldung übertragen wird, wobei bei einer ohne ACL-Wert eintreffenden Call-Processing-Meldung die fehlende Überlastinformation als Überlast-Wert 0 interpretiert wird und in die Berechnung des effektiven Überlastwerts miteinbezogen wird.

3. Verfahren nach Anspruch 1 oder 2,
**dadurch gekennzeichnet,** daß
der genannte effektive Überlast-Wert ermittelt wird, indem jeweils nach Ablauf eines bestimmten Zeitintervalls anhand der innerhalb des Zeitintervalls empfangenen ACL-Werte ein Mittelwert gebildet wird und dieser Mittelwert zur Berechnung des aktuellen effektiven Überlast-Werts verwendet wird.

4. Verfahren nach Anspruch 1 oder 2,
**dadurch gekennzeichnet,** daß
der genannte effektive Überlast-Wert ermittelt wird, indem jeweils nach Ablauf eines Zeitintervalls anhand des Mittelwertes der innerhalb des Zeitintervalls empfangenen ACL-Werte und des nach Ablauf des vorherigen Zeitintervalls ermittelten effektiven Überlast-Wertes nach einer bestimmten Abbildungsvorschrift ein aktueller effektiver Überlast-Wert ermittelt wird.

5. Verfahren nach Anspruch 1 oder 2,
**dadurch gekennzeichnet,** daß
der effektive Überlastwert durch zweimalige Mittelwertbildung ermittelt wird, indem zuerst aus den Überlastwerten aufeinanderfolgender Zeitintervalle Mittelwerte gebildet werden und dann über diese Mittelwerte ein zweites, nun gewichtetes Mittel gebildet wird.

6. Verfahren nach Anspruch 5
**dadurch gekennzeichnet,** daß
das gewichtete Mittel durch eine gewichtete Summe über die Intervallmittelwerte gebildet wird.

7. Verfahren nach Anspruch 1 oder 2
**dadurch gekennzeichnet,** daß
der genannte effektive Überlast-Wert aus dem letzten effektiven Überlast-Wert und dem Mittelwert der innerhalb des letzten Zeitintervalls empfangenen ACL-Werte ermittelt wird, indem ein gegenüber dem letzten effektiven Überlast-Wert um einen bestimmten ersten Wert erhöhter effektiver Überlast-Wert gebildet wird, wenn der genannte Mittelwert größer als ein bestimmter erster Schwellwert ist, und ein um einen bestimmten zweiten Wert erniedrigter effektiver Überlast-Wert gebildet wird, wenn der genannte Mittelwert kleiner als ein bestimmter zweiter Schwellwert ist.

8. Verfahren nach Anspruch 1 oder 2,
   **dadurch gekennzeichnet,** daß
   der genannte effektive Überlast-Wert jeweils nach Empfang eines ACL-Wertes aktualisiert wird, wobei der aktuelle effektive Überlast-Wert anhand des vorherigen effektiven Überlast-Wertes und des empfangenen ACL-Wertes nach einer bestimmten Abbildungsvorschrift ermittelt wird.

9. Verfahren nach einem der Ansprüche 1 bis 8,
   **dadurch gekennzeichnet,** daß
   der genannte effektive Überlast-Wert nur dann ermittelt wird, wenn Überlast festgestellt wurde, das heißt, wenn in einem bestimmten zurückliegenden Zeitraum mindestens ein positiver ACL-Wert empfangen wurde.

10. Verfahren nach einem der Ansprüche 1 bis 9,
    **dadurch gekennzeichnet,** daß
    es sich bei dem genannten ACL-Wert um einen ACL-Wert nach einem ACC-Standard handelt.

11. Verfahren nach nach einem der Ansprüche 1 bis 10,
    **dadurch gekennzeichnet,** daß
    es sich bei der genannten Abwehrmaßnahme einer Nachbarvermittlungsstelle um ein Abweisen von Calls oder ein alternatives Routen von Calls handelt.

12. Verfahren nach einem der Ansprüche 1 bis 11,
    **dadurch gekennzeichnet,** daß
    der genannte effektive Überlast-Wert auf einen Abwehrsteuerungswert abgebildet wird, gemäß dem eine Nachbarvermittlungsstelle die von ihr durchzuführende Abwehrmaßnahme steuert.

# ACC nach ITU-Standard

VST

VST   VST   VST

VST

#7 REL

mit ACL =1
oder ACL =2

FIG 1

EP 0 932 313 A1

# FIG 2

## Ermittlung des Grades der Überlast

VST

SET-UP-COMPLETE

mit OPL

CP STATOR

$OPL \begin{cases} 0 \\ 1 \\ \vdots \\ 6 \end{cases}$

Umrechnung OPL in ACC auf jeder LTG

LTG

EP 0 932 313 A1

# FIG 3

## Informieren einer Nachbar-VST

SET-UP-COMPLETE
mit ACL

LTG

Nachbar-VST

# 7 REL
mit ACL

VST

CP
OPL

LTG

ACL

VST

Trunkdatenbasis

EP 0 932 313 A1

# Bündelbezogene Auswertung der Information an der Nachbar-VST

Nachbar-VST

LTG

LTG

LTG

LTG

Trunkbündel 1

Trunkbündel n

LTG

LTG

LTG

LTG

REL-C mit ACL

CP

Trunkdatenbasis

Nachbar-VST 1

Bündel 1

:

Bündel n

Nachbar-VST n

Bündel n

:

Bündel n

FIG 4

EP 0 932 313 A1

Europäisches
Patentamt

**EUROPÄISCHER RECHERCHENBERICHT**

Nummer der Anmeldung

EP 98 10 1399

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 5 253 248 A (DRAVIDA SUBRAHMANYAM ET AL) 12. Oktober 1993<br>* Spalte 3, Zeile 11 - Zeile 45 *<br>* Spalte 11, Zeile 6 - Spalte 12, Zeile 12 *<br>* Spalte 9, Zeile 59 - Spalte 10, Zeile 40 *<br>--- | 1,7,11,12 | H04Q3/66 |
| X | REGNIER J ET AL: "STATE-DEPENDENT DYNAMIC TRAFFIC MANAGEMENT FOR TELEPHONE NETWORKS" IEEE COMMUNICATIONS MAGAZINE, Bd. 28, Nr. 10, 1. Oktober 1990, Seiten 42-53, XP000165754<br>* Seite 49 - Seite 50 *<br>--- | 1 | |
| A | EP 0 696 147 A (SIEMENS AG) 7. Februar 1996<br>* Spalte 2, Zeile 50 - Spalte 4, Zeile 2 *<br>--- | 1 | |
| A | EP 0 400 879 A (AMERICAN TELEPHONE & TELEGRAPH) 5. Dezember 1990<br>* Spalte 2, Zeile 48 - Spalte 4, Zeile 57 *<br>----- | 1 | RECHERCHIERTE SACHGEBIETE (Int.Cl.6)<br><br>H04Q |

Der vorliegende Recherchenbericht wurde für alle Patentansprüche erstellt

| Recherchenort | Abschlußdatum der Recherche | Prüfer |
|---|---|---|
| DEN HAAG | 10. Juli 1998 | TOUSSAINT, F |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 98 10 1399

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-1998

| Im Recherchenbericht angeführtes Patentdokument | | Datum der Veröffentlichung | Mitglied(er) der Patentfamilie | | Datum der Veröffentlichung |
|---|---|---|---|---|---|
| US 5253248 | A | 12-10-1993 | DE | 69118974 D | 30-05-1996 |
| | | | DE | 69118974 T | 10-10-1996 |
| | | | EP | 0465090 A | 08-01-1992 |
| | | | JP | 2679895 B | 19-11-1997 |
| | | | JP | 4233848 A | 21-08-1992 |
| EP 0696147 | A | 07-02-1996 | BR | 9508483 A | 25-11-1997 |
| | | | WO | 9604757 A | 15-02-1996 |
| | | | FI | 970392 A | 30-01-1997 |
| | | | JP | 9508774 T | 02-09-1997 |
| | | | NO | 970476 A | 03-02-1997 |
| EP 0400879 | A | 05-12-1990 | US | 4993014 A | 12-02-1991 |
| | | | CA | 2014408 A,C | 30-11-1990 |
| | | | DE | 69028142 D | 26-09-1996 |
| | | | DE | 69028142 T | 06-03-1997 |
| | | | JP | 10098526 A | 14-04-1998 |
| | | | JP | 2705839 B | 28-01-1998 |
| | | | JP | 3022745 A | 31-01-1991 |

EPO FORM P0461

Für nähere Einzelheiten zu diesem Anhang : siehe Amtsblatt des Europäischen Patentamts, Nr.12/82